# EUROPÄISCHE PATENTANMELDUNG

(11) **EP 4 306 623 A1**
(43) Veröffentlichungstag der Anmeldung: **17.01.2024**
(21) Anmeldenummer: 22020329.3
(22) Anmeldetag: 13.07.2022
(51) Int. Cl.: C10L 3/08, C10L 3/10, B01D 53/14

(54) **VERFAHREN UND VORRICHTUNG ZUR ERZEUGUNG VON SYNTHETISCHEM ERDGAS**

(71) Anmelder: Linde GmbH, 82049 Pullach (DE)
(72) Erfinder: Zehrer, Stephan, 82049 Pullach (DE); Bohn, Jan-Peter, 82049 Pullach (DE)
(74) Vertreter: Fischer, Werner

(57) **Zusammenfassung**

Die Erfindung betrifft ein Verfahren sowie eine Vorrichtung zur Erzeugung von synthetischem Erdgas (7) aus einem Kohlendioxid und Schwefelkomponenten enthaltenden Syntheserohgas (1), das dabei in einem ersten Absorber (A1) einer Wäsche mit einem physikalisch wirkenden Waschmittel (2) unterzogen wird, um die Schwefelkomponenten sowie Kohlendioxid aus dem Syntheserohgas (1) abzutrennen und ein schwefelfreies, weitgehend aus Wasserstoff und Kohlenmonoxid bestehendes Synthesegas (3) zu erhalten, das nachfolgend einer Methanisierung (M) unterzogen wird, bei der ein Methan sowie Kohlendioxid enthaltendes Gasgemisch (4) entsteht, das zur Aufbereitung zu synthetischem Erdgas (7) in einem zweiten Absorber (A2) einer Gaswäsche unterzogen wird, um Kohlendioxid abzutrennen, wobei ein mit Kohlendioxid beladenes Waschmittel (9) sowie ein weitgehend aus Methan bestehendes Gasgemisch (6) anfallen. Kennzeichnend hierbei ist, dass im ersten (A1) und im zweiten Absorber (A2) das gleiche physikalisch wirkende Waschmittel zum Einsatz kommt, wobei im zweiten Absorber (A2) mit Kohlendioxid beladenes Waschmittel (9) im ersten Absorber (A1) bei der Wäsche des Syntheserohgases (1) verwendet wird.

## Beschreibung

Die Erfindung betrifft ein Verfahren zur Erzeugung von synthetischem Erdgas aus einem Kohlendioxid und Schwefelkomponenten enthaltenden Syntheserohgas, das dabei in einem ersten Absorber einer Wäsche mit einem physikalisch wirkenden Waschmittel unterzogen wird, um die Schwefelkomponenten sowie Kohlendioxid aus dem Syntheserohgas abzutrennen und ein schwefelfreies, weitgehend aus Wasserstoff und Kohlenmonoxid bestehendes Synthesegas zu erhalten, das nachfolgend einer Methanisierung unterzogen wird, bei der ein Methan sowie Kohlendioxid enthaltendes Gasgemisch entsteht, das zur Aufbereitung zu synthetischem Erdgas in einem zweiten Absorber einer Gaswäsche unterzogen wird, um Kohlendioxid abzutrennen, wobei ein mit Kohlendioxid beladenes Waschmittel sowie ein weitgehend aus Methan bestehendes Gasgemisch anfallen.

Weiterhin betrifft die Erfindung eine Vorrichtung zur Durchführung des erfindungsgemäßen Verfahrens.

Ist im vorliegenden Text ein Stoffgemisch als frei von einer oder mehreren Komponenten charakterisiert, so liegt der Gehalt dieser Komponente bzw. Komponenten bei höchstens 0,01% auf molarer Gewichts- oder Volumenbasis. Ein Synthesegas wird somit als schwefelfrei angesehen, wenn die Summe der enthaltenen Schwefelkomponenten einen Anteil von 0,01% nicht übersteigt.

Synthetisches Erdgas oder SNG (von Synthetic oder Substitute Natural Gas) ist ein künstlich erzeugtes, methanreiches Gasgemisch, das ein aus fossilem Roh-Erdgas gewonnenes, an einen Endverbraucher abgebbares Erdgas zumindest teilweise ersetzten und die vorhandene Erdgas-Infrastruktur nutzen kann. SNG wird aus kohlenstoffhaltigen Einsätzen wie Kohle, Vakuumdestillationsrückständen oder Schweröl gewonnen, die dabei zunächst zu einem Syntheserohgas umgesetzt werden, das neben Wasserstoff und Kohlenmonoxid auch Kohlendioxid und Schwefelkomponenten sowie weitere in einem Erdgas unerwünschte Stoffe umfasst. Um die bei der nachfolgenden Methanisierung eingesetzten schwefelempfindlichen Katalysatoren zu schützen, werden die Schwefelkomponenten mit Hilfe eines physikalisch wirkenden Waschmittels in einem ersten Absorber entfernt, der auch zur Abtrennung von Kohlendioxid dient. Das so erhaltene schwefelfreie, weitgehend aus Wasserstoff, Kohlenmonoxid bestehende und Kohlendioxid enthaltende Synthesegas wird anschließend methanisiert, wobei Kohlenmonoxid mit Wasserstoff zu Methan und Wasser umgesetzt wird, und Kohlendioxid entsteht.

In einem oder mehreren Schritten wird das durch die Methanisierung gebildete Gasgemisch zu synthetischem Erdgas aufbereitet, wozu insbesondere Kohlendioxid abgetrennt wird. Das Gasgemisch wird hierzu nach dem Stand der Technik in einem zweiten Absorber einer Wäsche mit einem chemisch wirkenden Waschmittel unterzogen. Weitere im Erdgas nicht erwünschte Stoffe werden gewöhnlich mit Hilfe eines Adsorbers aus dem im zweiten Absorber von Kohlendioxid befreiten Gasgemisch entfernt.

Gegenüber physikalischen, besitzen chemische Gaswäschen einige Nachteile. Zum einen sind die als chemisch wirkende Waschmittel eingesetzten leicht alkalischen wässrigen Lösungen deutlich teurer und erfordern zum anderen bei ihrer Regenerierung einen erheblich höheren Energieeinsatz als physikalisch wirkende Waschmittel. Aufgrund der hohen Absorbertemperaturen gelangt außerdem ein größerer Teil des chemisch wirkenden Waschmittels in das gewaschene Gas, aus dem es mit erheblichem Aufwand wieder entfernt werden muss. Bei der SNG-Herstellung ist der Einsatz einer chemischen Gaswäsche nur deshalb wirtschaftlich vertretbar, weil deutlich geringere Methanmengen als in einer physikalischen Gaswäsche coabsorbiert werden und bei der Regenerierung des vorwiegend mit Kohlendioxid beladenen Waschmittels verloren gehen.

Aufgabe der vorliegenden Erfindung ist es, ein Verfahren sowie eine Vorrichtung der gattungsgemäßen Art anzugeben, durch synthetisches Erdgas wirtschaftlicher als nach dem Stand der Technik erzeugt werden kann.

Diese Aufgabe wird verfahrensseitig erfindungsgemäß dadurch gelöst, dass im ersten und im zweiten Absorber das gleiche physikalisch wirkende Waschmittel zum Einsatz kommt, wobei im zweiten Absorber mit Kohlendioxid beladenes Waschmittel im ersten Absorber bei der Wäsche des Syntheserohgases verwendet wird.

Durch das erfindungsgemäße Verfahren ist es möglich, bei der SNG-Herstellung auf den Einsatz einer chemischen Gaswäsche zu verzichten und Kohlendioxid aus dem durch die Methanisierung erhaltenen Gasgemisch mit Hilfe einer physikalischen Gaswäsche abzutrennen, ohne höhere Methanverluste in Kauf nehmen zu müssen.

Die Erfindung macht es sich dabei zunutze, dass das durch die Methanisierung erhaltene Gasgemisch schwefelfrei ist und einen deutlich geringeren Kohlendioxidgehalt als das im ersten Absorber zu waschende Syntheserohgas aufweist. Im zweiten Absorber fällt das physikalisch wirkende Waschmittel daher schwefelfrei und mit einem Kohlendioxidpartialduck an, der geringer ist als in dem zu waschenden Syntheserohgas. Es kann daher im ersten Absorber als Waschmittel eingesetzt werden, um Kohlendioxid, aber auch Schwefelkomponenten aus dem Syntheserohgas abzutrennen. Bei der Gaswäsche im zweiten Absorber coabsorbiertes Methan wird dabei aufgrund des niedrigeren Methanpartialdrucks im weitgehend methanfreien Syntheserohgas in die Gasphase freigesetzt und mit dem im ersten Absorber erhaltenen Synthesegas der Methanisierung zugeführt, von wo aus es in das SNG gelangt.

Vorzugsweise wird das gesamte im zweiten Absorber beladene Waschmittel im ersten Absorber bei der Wäsche des Syntheserohgases eingesetzt. Auf diese Weise können die niedrigen Methanverluste einer chemischen Gaswäsche nicht nur erreicht, sondern evtl. sogar unterschritten werden.

Als Waschmittel können im ersten und zweiten Absorber alle aus dem Stand der Technik für die Behandlung von Synthesegasen bekannten physikalisch wirkenden Waschmittel eingesetzt werden. Bevorzugt werden die beiden Absorber mit Methanol als Waschmittel betrieben.

Neben einem Absorber besitzen Gaswäschen einen Regenerierteil, wo das im Absorber mit aus dem gewaschenen Gasgemisch abgetrennten Stoffen beladene Waschmittel durch die Entfernung dieser Stoffe regeneriert wird, um unbeladenes Waschmittel für den erneuten Einsatz bei der Gaswäsche zu erhalten. Ein Regenerierteil umfasst eine Vielzahl von Apparaten und Maschinen, wie Abscheider, Wärmetauscher, Trennkolonnen und Pumpen, weshalb er viel Platz einnimmt und einen großen Kostenfaktor bildet. Bei der SNG-Erzeugung nach dem Stand der Technik benötigt sowohl der erste als auch der zweite Absorber jeweils einen eigenen Regenerierteil, um die unterschiedlichen Waschmittel getrennt voneinander behandeln zu können.

Das erfindungsgemäße Verfahren ermöglicht es, auf einen eigenen, ausschließlich dem zweitem Absorber zugeordneten Regenerierteil zu verzichten und das in beiden Absorbern eingesetzte Waschmittel gemeinsam in einem einzigen Regenerteil zu behandeln, aus dem sowohl der erste als auch der zweite Absorber mit unbeladenem Waschmittel versorgt werden. Falls das gesamte im zweiten Absorber beladene Waschmittel zur Wäsche des Syntheserohgases im ersten Absorber eingesetzt wird, gelangt es zwangsläufig in den zum ersten Absorber gehörigen Regenerierteil. Aber auch dann, wenn nur ein Teil des im zweiten Absorber beladenen Waschmittels im ersten Absorber verwendet wird, kann das übrige beladene Waschmittel direkt in den Regenerierteil des ersten Absorbers eingeleitet werden, wobei allerdings coabsorbiertes Methan u.U. verloren geht.

Aufgrund der Doppelnutzung des im zweiten Absorber eingesetzten Waschmittels, erlaubt das erfindungsgemäße Verfahren die SNG-Produktion unter Verwendung einer gegenüber den Stand der Technik nur unwesentlich größeren Menge an physikalisch wirkendem Waschmittel, zu dessen Aufbereitung ein Regenerierteil mit nur geringfügig höherer Kapazität eingesetzt werden kann.

Insbesondere dann, wenn das SNG verflüssigt und mit Temperaturen zwischen -161 und -164°C als Flüssigerdgas (LNG) abgegeben werden soll, ist es erforderlich, das im zweiten Absorber erhaltene Gasgemisch einem Adsorber zuzuführen, um Waschmittelreste, Kohlendioxid und andere Stoffe abzutrennen, die bei den tiefen Temperaturen ausfrieren und in den eingesetzten Apparaten zu Blockaden führen würden. Durch die Erfindung kann der Adsorber im Vergleich zum Stand der Technik wesentlich kleiner und kostengünstiger ausgeführt werden, da bei der im zweiten Absorber durchgeführten physikalischen Gaswäsche deutlich weniger Waschmittel in das gewaschene Gasgemisch gelangt. Außerdem wird eine physikalische bei niedrigeren Temperaturen durchgeführt als eine chemische Gaswäsche, weshalb das gewaschen Gasgemisch kälter und mit geringerem Volumenstrom anfällt.

Zur Regenerierung des stromabwärts einer chemischen Gaswäsche angeordneten Adsorbers wird nach dem Stand der Technik im Adsorber gereinigtes SNG als Regeneriergas eingesetzt, das dabei mit desorbierten Stoffen beladen wird. Zur Rückgewinnung des SNG wird das beladene Regeneriergas anschließend abgekühlt, um die desorbierten Stoffe als wässriges Kondensat abzuziehen, und vor den Adsorber zurückgeführt. Genauso wie die hierfür notwendige Verdichtung, ist auch die Abkühlung des Regeneriergases mit erheblichen Kosten verbunden.

Dem Regenerierteil der physikalischen Gaswäschen wird aus einer externen Quelle ein insbesondere kohlendioxidfreies Gas zugeführt und bei der Regenerierung des beladenen physikalischen Waschmittels als Strippgas zur Kohlendioxidabtrennung eingesetzt. Beispielsweise handelt es sich bei dem Strippgas um Niederdruck-Stickstoff und bei der externen Strippgasquelle um einen Luftzerleger, der auch Sauerstoff für die Gewinnung des Syntheserohgases erzeugt.

Eine bevorzugte Variante des erfindungsgemäßen Verfahrens sieht vor, zur Regenerierung des stromabwärts des zweiten Absorbers eingesetzten Adsorbers ein Gas zu verwenden, das auch geeignet ist, bei der Regenerierung des beladenen physikalisch wirkenden Waschmittels als Strippgas verwendet zu werden. Dieses Regeneriergas nimmt im Adsorber vor allem Kohlendioxid auf, und kann deswegen nicht als kohlendioxidfrei gelten. Es ist jedoch schwefelfrei und besitzt einen geringeren Kohlendioxidpartialdruck das beladene physikalisch wirkende Waschmittel. Es wird daher vorgeschlagen, das im Adsorber beladene Regeneriergas im Regenerierteil der physikalischen Gaswäschen zur Strippung von beladenem Waschmittel zu verwenden. Aus den Absorbern ausgetragenes und im Adsorber zurückgehaltenes physikalisch wirkendes Waschmittel wird aus dem beladenen Regeneriergas bei der Strippung ausgewaschen, so dass es nicht verloren geht, sondern zurück in den Waschmittelkreislauf der physikalischen Gaswäschen gelangt. Das beladene Regeneriergas kann ohne weitere Behandlung als Strippgas verwendet werden. Insbesondere ist es nicht erforderlich, das beladene Regeneriergas abzukühlen. Besonders bevorzugt wird zur Regenerierung des Adsorbers Gas aus der externen Strippgasquelle eingesetzt. Zumindest dann, wenn es sich bei dem Regeneriergas um Niederdruck-Stickstoff handelt, kann auch auf dessen Verdichtung verzichtet werden.

Weiterhin betrifft die Erfindung eine Vorrichtung zur Erzeugung von synthetischem Erdgas aus einem Kohlendioxid und Schwefelkomponenten enthaltenden Syntheserohgas, aufweisend einen ersten Absorber, in dem die Schwefelkomponenten sowie Kohlendioxid aus dem Syntheserohgas durch Wäsche mit einem physikalisch wirkenden Waschmittel abgetrennt werden können, um ein schwefelfreies, weitgehend aus Wasserstoff und Kohlenmonoxid bestehendes Synthesegas zu erhalten, einem Methanisierungsreaktor, in dem das Synthesegas einer Methanisierung unterziehbar ist, bei der ein Methan sowie Kohlendioxid enthaltendes Gasgemisch entsteht, sowie einer Aufbereitungseinrichtung zur Aufbereitung des Methan sowie Kohlendioxid enthaltenden Gasgemisches zu synthetischem Erdgas, wobei die Aufbereitungseinrichtung zumindest einen zweiten Absorber umfasst, in dem das Methan sowie Kohlendioxid enthaltende Gasgemisch zur Abtrennung von Kohlendioxid einer Wäsche mit einem Waschmittel unterzogen werden kann, bei der ein mit Kohlendioxid beladenes Waschmittel sowie ein weitgehend aus Methan bestehendes Gasgemisch anfallen.

Vorrichtungsseitig wird die gestellte Aufgabe erfindungsgemäß dadurch gelöst, dass im ersten und im zweiten Absorber das gleiche physikalisch wirkende Waschmittel verwendbar und der zweite mit dem ersten Absorber derart verbunden ist, das im zweiten Absorber mit Kohlendioxid beladenes physikalisch wirkendes Waschmittel im ersten Absorber bei der Wäsche des Syntheserohgases eingesetzt werden kann.

Vorzugsweise umfasst die erfindungsgemäße Vorrichtung einen Regenerierteil, mit dem sowohl der erste als auch der zweite Absorber strömungstechnisch verbunden ist und aus dem die beiden Absorber mit regeneriertem physikalisch wirkendem Waschmittel versorgt werden können. Falls nur ein Teil des im zweiten Absorber mit Kohlendioxid beladenen physikalisch wirkenden Waschmittels im ersten Absorber als Waschmittel einsetzbar ist, besteht zweckmäßigerweise zwischen dem zweiten Absorber und dem Regenerierteil eine Verbindung, über die das restliche mit Kohlendioxid beladene physikalisch wirkende Waschmittel aus dem zweiten Absorber direkt dem Regenerierteil an geeigneter Stelle zugeführt werden kann.

Die Aufbereitungseinrichtung der erfindungsgemäßen Vorrichtung kann einen stromabwärts des zweiten Absorbers angeordneten Adsorber zur Abtrennung von in einem Erdgas unerwünschten Stoffen aus dem im zweiten Absorber anfallenden, weitgehend aus Methan bestehenden Gasgemisch umfassen. Bevorzugt ist der Adsorber mit einer Gasquelle sowie dem Regenerierteil der physikalischen Gaswäschen derart verbunden, dass aus der Gasquelle entnehmbares Gas zur Adsorberregenerierung verwendet und anschließend dem Regenerierteil als Strippgas zugeführt werden kann. Besonders bevorzugt handelt es sich bei der Gasquelle um eine externe Strippgasquelle wie etwa einen Luftzerleger, aus der auch Strippgas für den Regenerierteil entnehmbar ist.

Der erste und der zweite Absorber sind so ausgeführt, dass sie mit einem aus dem Stand der Technik bekannten physikalische wirkenden Waschmittel betrieben werden können. Bevorzugt sind die beiden Absorber mit Methanol betreibbar.

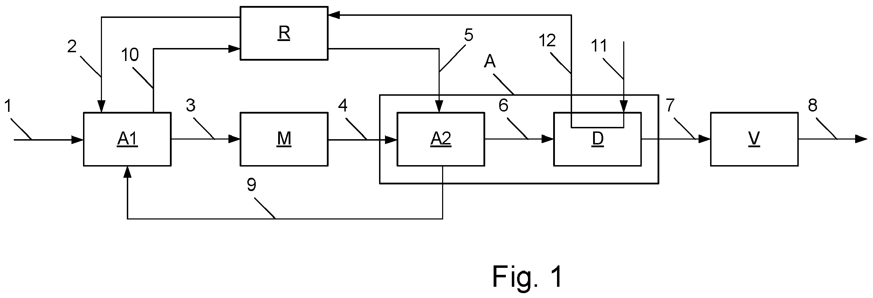

Im Folgenden soll die Erfindung anhand eines in der **Figur 1** schematisch dargestellten Ausführungsbeispiels näher erläutert werden.

Die Figur 1 zeigt eine bevorzugte Variante der Erfindung, bei der das erhaltene synthetische Erdgas durch Abkühlung verflüssigt und als Flüssigerdgas abgegeben wird.

Über Leitung 1 wird ein beispielsweise aus Kohle gewonnenes, weitgehend aus Wasserstoff, Kohlenmonoxid und Kohlendioxid bestehendes und Schwefelkomponenten enthaltendes Syntheserohgas einem ersten Absorber A1 zugeführt, um die Schwefelkomponenten sowie Kohlendioxid mit Hilfe eines physikalisch wirkenden Waschmittels 2 abzutrennen und ein schwefelfreies Synthesegas 3 zu erzeugen. Mit Hilfe eines schwefelempfindlichen Katalysators wird das weitgehend aus Wasserstoff, Kohlenmonoxid und Kohlendioxid bestehende Synthesegas 3 in der Methanisierungseinrichtung M umgesetzt, wobei Kohlenmonoxid mit Wasserstoff zu Methan und Wasser umgesetzt wird und Kohlendioxid entsteht. Das in der Methanisierungseinrichtung M erhaltene Gasgemisch 4, dessen Kohlendioxidgehalt geringer ist als der des Syntheserohgases 1, wird in die Aufbereitungseinrichtung A weitergeleitet, wo es in einem zweiten Absorber A2 mit einem physikalisch wirkenden Waschmittel 5 behandelt wird, um insbesondere Kohlendioxid abzutrennen und ein weitgehend aus Methan bestehendes Gasgemisch 6 zu erzeugen, das daneben aber noch Reste von Kohlendioxid und Waschmittel enthält. Diese Reste werden im Adsorber D entfernt, da es bei den tiefen Temperaturen ausfrieren würden, die im Verflüssiger V herrschenden, dem das Gasgemisch über Leitung 7 zugeführt wird, um durch Abkühlung zu Flüssigerdgas 8 kondensiert zu werden.

Sowohl der erste A1 als auch im zweite Absorber A2 wird mit dem gleichen physikalisch wirkenden Waschmittel betrieben, bei dem es sich vorzugsweise um Methanol handelt. Das im zweiten Absorber A2 beladene Waschmittel 9 ist schwefelfrei und weist einen Kohlendioxidpartialdruck auf, der geringer ist als derjenige des Syntheserohgases 1. Es kann daher im ersten Absorber A1 als Waschmittel eingesetzt werden, um Kohlendioxid und Schwefelkomponenten aus dem Syntheserohgas 1 auszuwaschen. Im Regenerierteil R werden die in den Absorbern A1 und A2 aufgenommenen Stoffe unter anderen durch Strippung aus dem beladenen Waschmittel 10 abgetrennt, um unbeladenes physikalisch wirkendes Waschmittel zu erhalten, das dem ersten Absorber über Leitung 2 und den zweiten Absorber A2 über Leitung 5 zugeführt wird.

Zur Regenerierung des Adsorbers A wird aus einer externen Quelle, bei der es sich etwa um einem Luftzerleger (nicht dargestellt) handelt, Niederdruck-Stickstoff 11 zugeführt, der anschließend mit desorbierten Stoffen beladen über Leitung 12 in den Regenerierteil R überführt wird, wo er als Strippgas dient, mit dem beispielsweise Kohlendioxid aus dem beladene physikalisch wirkenden Waschmittel 10 ausgetrieben wird.

## Patentansprüche

1. Verfahren zur Erzeugung von synthetischem Erdgas (7) aus einem Kohlendioxid und Schwefelkomponenten enthaltenden Syntheserohgas (1), das dabei in einem ersten Absorber (A1) einer Wäsche mit einem physikalisch wirkenden Waschmittel (2) unterzogen wird, um die Schwefelkomponenten sowie Kohlendioxid aus dem Syntheserohgas (1) abzutrennen und ein schwefelfreies, weitgehend aus Wasserstoff und Kohlenmonoxid bestehendes Synthesegas (3) zu erhalten, das nachfolgend einer Methanisierung (M) unterzogen wird, bei der ein Methan sowie Kohlendioxid enthaltendes Gasgemisch (4) entsteht, das zur Aufbereitung zu synthetischem Erdgas (7) in einem zweiten Absorber (A2) einer Gaswäsche unterzogen wird, um Kohlendioxid abzutrennen, wobei ein mit Kohlendioxid beladenes Waschmittel (9) sowie ein weitgehend aus Methan bestehendes Gasgemisch (6) anfallen, **dadurch gekennzeichnet, dass** im ersten (A1) und im zweiten Absorber (A2) das gleiche physikalisch wirkende Waschmittel zum Einsatz kommt, wobei im zweiten Absorber (A2) mit Kohlendioxid beladenes Waschmittel (9) im ersten Absorber (A1) bei der Wäsche des Syntheserohgases (1) verwendet wird.

2. Verfahren nach Anspruch 1, **dadurch gekennzeichnet, dass** der erste (A1) und der zweite Absorber (A2) über einen Regenerierteil (R) miteinander verbunden sind, in dem sowohl das im ersten (A1) als auch das im zweiten Absorber (A2) beladene Waschmittel (5, 10) regeneriert wird und aus dem die beiden Absorber (A1, A2) mit regeneriertem Waschmittel (2, 5) versorgt werden.

3. Verfahren nach einem der Ansprüche 1 oder 2, **dadurch gekennzeichnet, dass** das im zweiten Absorber (A2) anfallende, weitgehend aus Methan bestehende Gasgemisch durch die adsorptive Abtrennung von unerwünschten Stoffen zu synthetischem Erdgas (7) aufbereitet wird.

4. Verfahren nach einem der Ansprüche 1 bis 3, **dadurch gekennzeichnet, dass** sowohl im ersten (A1) als auch im zweiten Absorber (A2) Methanol als Waschmittel eingesetzt wird.

5. Vorrichtung zur Erzeugung von synthetischem Erdgas (7) aus einem Kohlendioxid und Schwefelkomponenten enthaltenden Syntheserohgas (1), aufweisend einen ersten Absorber (A1), in dem die Schwefelkomponenten sowie Kohlendioxid aus dem Syntheserohgas (1) durch Wäsche mit einem physikalisch wirkenden Waschmittel (2) abgetrennt werden können, um ein schwefelfreies, weitgehend aus Wasserstoff und Kohlenmonoxid bestehendes Synthesegas (3) zu erhalten, einem Methanisierungsreaktor (M), in dem das Synthesegas (3) einer Methanisierung unterziehbar ist, bei der ein Methan sowie Kohlendioxid enthaltendes Gasgemisch (4) entsteht, sowie einer Aufbereitungseinrichtung (A) zur Aufbereitung des Methan sowie Kohlendioxid enthaltenden Gasgemisches (4) zu synthetischem Erdgas (7), wobei die Aufbereitungseinrichtung (A) zumindest einen zweiten Absorber (A2) umfasst, in dem das Methan sowie Kohlendioxid enthaltende Gasgemisch (4) zur Abtrennung von Kohlendioxid einer Wäsche mit einem Waschmittel (5) unterzogen werden kann, bei der ein mit Kohlendioxid beladenes Waschmittel (9) sowie ein weitgehend aus Methan bestehendes Gasgemisch (6) anfallen, **dadurch gekennzeichnet, dass** im ersten (A1) und im zweiten Absorber (A2) das gleiche Waschmittel verwendbar und der zweite (A2) mit dem ersten Absorber (A1) derart verbunden ist, das im zweiten Absorber (A2) mit Kohlendioxid beladenes Waschmittel (9) im ersten Absorber (A1) bei der Wäsche des Syntheserohgases (1) eingesetzt werden kann.

6. Vorrichtung nach Anspruch 5, **dadurch gekennzeichnet, dass** der erste (A1) und der zweite Absorber (A2) über einen Regenerierteil (R) miteinander verbunden sind, aus dem die beiden Absorber (A1, A2) mit regeneriertem physikalisch wirkendem Waschmittel (2, 5) versorgt werden können.

7. Vorrichtung nach einem der Ansprüche 5 oder 6, **dadurch gekennzeichnet, dass** die Aufbereitungseinrichtung (A) einen stromabwärts des zweiten Absorbers (A2) angeordneten Adsorber (D) zur Abtrennung von in Erdgas unerwünschten Stoffen aus dem im zweiten Absorber (A2) anfallenden, weitgehend aus Methan bestehenden Gasgemisch (6) umfasst.

8. Vorrichtung nach einem der Ansprüche 5 bis 7, **dadurch gekennzeichnet, dass** im ersten (A1) und zweiten Absorber (A2) Methanol oder als physikalisch wirkendes Waschmittel einsetzbar ist.
